**Europäisches Patentamt**

**European Patent Office**

**Office européen des brevets**

(11) Veröffentlichungsnummer: **0 035 596**
**B1**

(12) **EUROPÄISCHE PATENTSCHRIFT**

(45) Veröffentlichungstag der Patentschrift:
**23.03.83**

(21) Anmeldenummer: **80107776.9**

(22) Anmeldetag: **10.12.80**

(51) Int. Cl.³: **B 60 J 3/00**

(54) Sonnenblende, insbesondere für Fahrzeuge.

(30) Priorität: **04.03.80 DE 3008175**

(43) Veröffentlichungstag der Anmeldung:
**16.09.81 Patentblatt 81/37**

(45) Bekanntmachung des Hinweises auf die Patenterteilung:
**23.03.83 Patentblatt 83/12**

(84) Benannte Vertragsstaaten:
**DE FR GB IT SE**

(56) Entgegenhaltungen:
**DE-A-2 725 430**
**FR-A-2 327 880**
**FR-A-2 429 685**
**FR-A-2 453 042**
**US-A-4 068 930**

(73) Patentinhaber: **Gebr. Happich GmbH,**
**Postfach 10 02 49 Clausenbrücke 1,**
**D-5600 Wuppertal 1 (DE)**

(72) Erfinder: **Kaiser, Peter, Sellscheid 42,**
**D-5632 Wermelskirchen (DE)**
Erfinder: **Viertel, Lothar, V. Gartenreihe 48,**
**D-6630 Saarlouis (DE)**

Sonnenblende, insbesondere für Fahrzeuge

Die Erfindung bezieht sich auf eine Sonnenblende der im Oberbegriff des Patentanspruchs 1 angegebenen Art.

Sonnenblenden für Fahrzeuge werden in zunehmendem Maße mit Spiegeln ausgerüstet, denen oftmals auch eine Lichtquelle zugeordnet ist. Die Spiegel sind dabei im allgemeinen in Spiegelrahmen eingesetzt, die ihrerseits derart in Sonnenblendenkörpern eingelagert sind, daß die Spiegel einsehbar sind, wenn die Sonnenblendenkörper sich in der heruntergeklappten Blendschutzlage befinden. Insbesondere aus Sicherheitsgründen wird gefordert, daß die Spiegel eine Abdeckklappe besitzen.

Durch das DE-U-7 702 394 ist eine Sonnenblende bekannt geworden, in deren Sonnenblendenkörper ein Rahmen eingelagert ist, welcher einen Spiegel und eine Abdeckklappe für diesen haltert. Bei dieser bekannten Sonnenblende tritt der Rahmen aus der Blendenebene heraus und bildet harte Kanten, die den Sicherheitsanforderungen entgegenstehen. Die mit dem Rahmen verbundene Abdeckklappe ist an der oberen Rahmenkante angelenkt und nur um etwa 90 Grad verschwenkbar. Die freie vordere Kante der Abdeckklappe ragt daher bei der Offenstellung in den Fahrgastraum hinein und kann bei einer Notbremsung oder bei einem Unfall eine Spießwirkung und damit eine Verletzungsgefahr für den jeweiligen Fahrzeugbenutzer erzeugen. Auch ist die Abdeckklappe bei der bekannten Sonnenblende unpraktisch zu öffnen.

Bei einer weiteren bekannten Sonnenblende mit Spiegel und diesen abdeckenden Abdeckklappe nach dem DE-U-7 533 246 ist die Abdeckklappe um etwa 180 Grad verschwenkbar am Rahmen gelagert, so daß hier die Gefahr einer Spießwirkung nicht gegeben ist. Jedoch tritt auch bei dieser bekannten Sonnenblende der Rahmen, ebenso wie die Abdeckklappe, aus der Ebene des Sonnenblendenkörpers heraus, und die Abdeckklappe ist relativ unpraktisch in der Handhabung, insbesondere schwierig zu öffnen.

In der FR-A-2 453 042 ist eine Sonnenblende mit einem im Sonnenblendenkörper angeordneten Spiegel und einer Spiegelabdeckung gezeigt, die nicht aus der Ebene des Sonnenblendenkörpers herausragt. Die Spiegelabdeckung besteht hier jedoch aus einem hin- und herbeweglich geführten Schieber, bei dem sich die bei einer Abdeckklappe in bezug auf die Sicherheitsanforderungen und einfaches Öffnen und Schließen bestehenden Probleme nicht ergeben.

Der im Patentanspruch 1 angegebenen Erfindung liegt demgemäß die Aufgabe zugrunde, die Sonnenblende der eingangs genannten Art in ihrem konstruktiven Aufbau zu vereinfachen, in bezug auf die Sicherheitsanforderungen zu verbessern sowie die Handhabung der Abdeckklappe zu erleichtern.

Die im Patentanspruch 1 gekennzeichnete Erfindung löst diese Aufgabe und bietet zum einen den Vorteil, daß nunmehr der den Spiegel tragende Rahmen ebenso wie die Abdeckklappe in einer Ebene mit der Oberfläche des Sonnenblendenkörpers liegen, so daß keine vorstehenden Kanten, die eine Verletzungsgefahr begründen können, mehr vorliegen. Insofern macht die Erfindung von der Lehre nach der FR-A-2 453 042 gebrauch. Zum andern bietet die Erfindung den Vorteil, daß die Handhabung der Abdeckklappe wesentlich erleichtert ist, indem sie nunmehr durch eine Knopfbetätigung zu öffnen und kein Abbrechen von Fingernägeln mehr zu befürchten ist. Denn durch Verschwenken des Betätigungsknopfes, was mit einer Fingerkuppe bewerkstelligt werden kann, wird die Abdeckklappe entriegelt, über den Totpunkt geführt und kann dann in ihre völlig geöffnete Lage geschwenkt werden, sofern sie durch ihr Eigengewicht diese Schwenkbewegung nicht schon selbsttätig ausführt.

Auch geht durch den Betätigungsknopf keine Verletzungsgefahr für den Fahrzeugbenutzer aus. Insgesamt zeichnet sich die Erfindung durch eine ebenso einfache wie zweckmäßige, unbedingt zuverlässige Konstruktion aus.

Die Maßnahme nach Patentanspruch 2 bietet den Vorteil, daß der Betätigungsknopf stets in Bereitschaftsstellung verharrt, so daß nicht nur das Entriegeln, sondern auch das Verriegeln der Abdeckklappe mit einer Hand erfolgen kann.

Der Vorteil der Maßnahme nach Patentanspruch 3 besteht darin, daß der Betätigungsknopf in denkbar einfacher Weise, nämlich durch bloßes Einstecken, montierbar ist. Dieser Vorteil ist auch in bezug auf die Abdeckklappe durch die Maßnahme nach Patentanspruch 4 gegeben.

Patentanspruch 5 kennzeichnet eine weitere zweckmäßige Ausgestaltung der Erfindung, die es erlaubt, die den Sonnenblendenkörper umgebende Folie beispielsweise mit einer optisch als Ziernaht erscheinenden Befestigung an dem Rahmenflansch anzuordnen und sowohl den Spiegel als auch die Abdeckklappe durch Einstecken bzw. Einklipsen zu montieren und zuverlässig abgestützt am Rahmen zu haltern.

Im folgenden wird der Gegenstand der Erfindung anhand eines auf der Zeichnung dargestellten Ausführungsbeispiels näher erläutert. Es zeigt

Fig. 1 einen Sonnenblendenkörper in Ansicht,

Fig. 2 den Schnitt II-II nach Fig. 1 in vergrößertem Maßstab und

Fig. 3 den Schnitt III-III nach Fig. 1 in ebenfalls vergrößertem Maßstab.

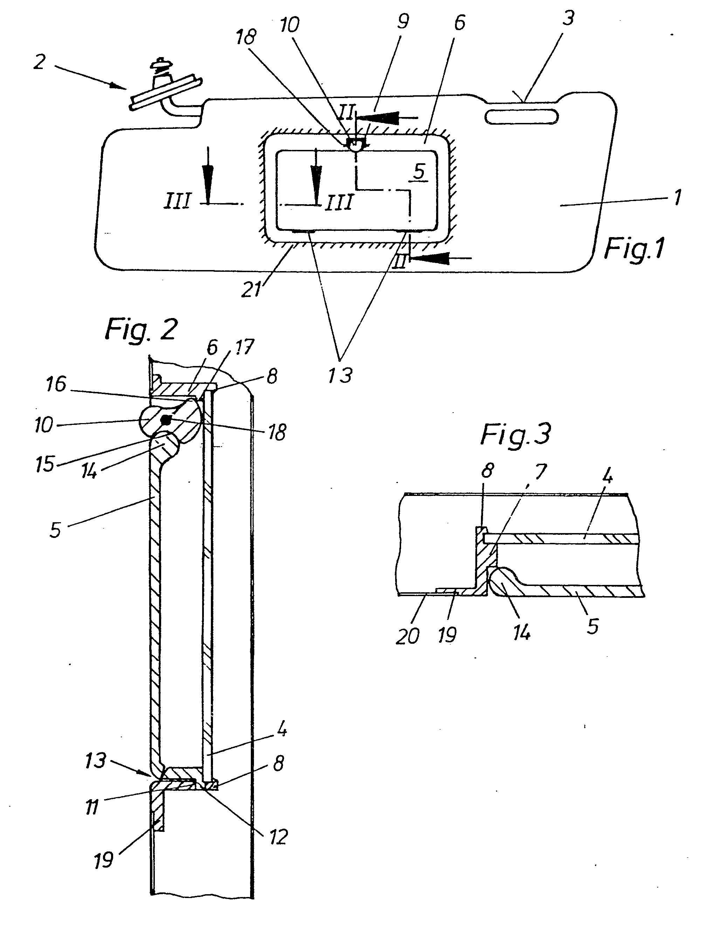

Fig. 1 zeigt eine Sonnenblende, deren Sonnenblendenkörper 1 an der oberen Randkante mit einem Schwenklager 2 und einer Achse 3 für ein Klapp- oder Gegenlager ausgerüstet ist. In den Sonnenblendenkörper 1 ist einseitig ein mit Spiegel 4 und Abdeckklappe 5 ausgerüsteter Rahmen 6 eingelagert. Die Befestigung des Rahmens 6 innerhalb des Sonnenblendenkörpers 1 erfolgt in bekannter Weise und wird daher nicht näher erläutert.

Der Rahmen 6 besitzt innenseitig einen umlaufenden Flansch 7, gegen den sich einseitig der Spiegel 4 und anderseitig die Abdeckklappe 5 abstützt. Der Spiegel 4 ist durch seine Randkanten hintergreifende Klipse 8, die an dem vorzugsweise aus Kunststoff gebildeten Rahmen 6 angeformt sind, lagefixiert. Der Flansch 7 besitzt im oberen Rahmenbereich eine mittig angeordnete Aussparung 9, in der ein Betätigungsknopf 10 schwenkbeweglich angeordnet ist. Im unteren Rahmenbereich sind zwei Stecköffnungen 11 vorgesehen, in die Steckzapfen 12 eingreifen, die über ein Filmscharnier 13 einstückig mit der ebenfalls vorzugsweise aus Kunststoff gebildeten Abdeckklappe 5 ausgebildet sind. Die Stecköffnungen 11 sind so angeordnet, daß die Steckzapfen 12 vom Spiegel 4 abgestützt sind, wobei an den Steckzapfen 12 angeformte Haken den Spiegelrand untergreifen, wie dies insbesondere aus Fig. 2 ersichtlich ist.

An ihren Seitenrändern und an ihrem oberen Längsrand besitzt die Abdeckklappe 5 einen verdickten Wulst 14, der so dimensioniert ist, daß die Außenfläche der Abdeckklappe 5 bündig mit der Außenfläche des Rahmens abschließt, wenn der Wulst 14 in der geschlossenen Endstellung der Abdeckklappe 5 an dem Flansch 7 des Rahmens 6 zur Anlage kommt.

Fig. 2 zeigt, daß der Betätigungsknopf 10 eine nutartige Aussparung 15 an seiner Unterseite aufweist, die den Wulst 14 an der oberen Randkante der Abdeckklappe 5 aufnimmt. Diese Aussparung 15 ermöglicht es in Verbindung mit der schwenkbeweglichen Lagerung des Betätigungsknopfes 10, die Abdeckklappe 5 zu verriegeln bzw. zu entriegeln. Denn bei der Schließbewegung greift der Wulst 14 in die Aussparung 15 ein und wird bei der Weiterbewegung in die geschlossene Endstellung über die Totpunktlage, die durch die gedachte Verbindungslinie der Gelenkstellen von Abdeckklappe 5 und Betätigungsknopf 10 definiert ist, bewegt. Zum Entriegeln der Abdeckklappe 5 wird der Betätigungsknopf 10 im Uhrzeigersinn und damit die Abdeckklappe 5 in entgegengesetzte Richtung verschwenkt, so daß sie, sobald sie außer Eingriff mit dem Betätigungsknopf 10 steht, völlig geöffnet werden kann.

An der der Aussparung 15 abgewandten Seite besitzt der Betätigungsknopf 10 einen angeformten Rastnocken 16, der dazu dient, den Betätigungsknopf 10 in der entriegelten Bereitschaftsstellung zu halten, indem der Rastnocken 16 die dem Spiegel 4 zugewandte Randkante 17 des Flansches 7 hintergreift. Der Rastnocken 16 hält in Verbindung mit der Randkante 17 den Betätigungsknopf 10 und die Abdeckklappe 5 auch in Schließstellung, so daß eine Alternative zur Übertotpunktlage oder eine zusätzliche Sicherung der Verriegelung gegeben ist.

Der Betätigungsknopf 10 besitzt seitlich angeformte Lagerzapfen 18, die in Fig. 1 strichpunktiert dargestellt sind. Zur Aufnahme der Lagerzapfen 18 weist der Rahmen 6 die Aussparung 9 erweiternde, nicht dargestellte langlochartige Ausnehmungen auf, die zum Spiegel 4 hin frei auslaufen. Somit ist sowohl für den Betätigungsknopf 10 und für die Abdeckklappe 5 als auch für den Spiegel 4 eine schnell und einfach durchzuführende Steck- bzw. Klipsmontage gegeben.

Der Rahmen 6 ist weiterhin mit einem äußeren Umlaufflansch 19 ausgerüstet, der entsprechend der Dicke der den Sonnenblendenkörper 1 umhüllenden Folie 20 zurückspringt. Die Folie 20 ist mit dem Umlaufflansch 19 verschweißt, wobei, wie dargestellt, der Effekt einer Ziernaht 21 erzielbar ist.

## Patentansprüche

1. Sonnenblende, insbesondere für Fahrzeuge, bestehend aus einem Sonnenblendenkörper (1) mit einem darin eingelagerten, einen Spiegel (4) und eine Abdeckklappe (5) für diesen halternden Rahmen (6), dadurch gekennzeichnet, daß der Rahmen (6) mit Abdeckklappe (5) versenkt im Sonnenblendenkörper (1) angeordnet ist und etwa bündig mit der entsprechenden Außenfläche des Sonnenblendenkörpers (1) abschließt, und daß der Rahmen (6) einen zum Verriegeln bzw. Entriegeln der Abdeckklappe (5) dienenden Betätigungsknopf (10) lagert, der ebenfalls zumindest weitgehend versenkt in einer der Schwenkachse (Filmscharnier 13) der Abdeckklappe (5) gegenüberliegenden Ausnehmung (9) des Rahmens (6) angeordnet, parallel zur Schwenkachse der Abdeckklappe (5) schwenkbar gelagert ist und eine die obere Randkante (Wulst 14) der Abdeckklappe (5) übergreifende Aussparung (15) aufweist, die unter Einschluß dieser Randkante über die gedachte Verbindungslinie der Schwenkachsen (Filmscharnier 13 und Lagerzapfen 18) bewegbar ist.

2. Sonnenblende nach Patentanspruch 1, dadurch gekennzeichnet, daß der Betätigungsknopf (10) auf der der Aussparung (15) abgewandten Seite einen mit einem Vorsprung oder einer Randkante (17) des Rahmens (6) zusammenwirkenden, ihn in Entriegelungsstellung haltenden Rastnocken (16) aufweist.

3. Sonnenblende nach Patentansprüchen 1 oder 2, dadurch gekennzeichnet, daß der Betätigungsknopf (10) beidseitig überstehende Lagerzapfen (18) aufweist, die in langlochartige Aussparungen an der Rückseite des Rahmens (6) eingreifen und durch den Spiegel (4) abstützbar sind.

4. Sonnenblende nach einem oder mehreren der Patentansprüche 1 bis 3, dadurch gekennzeichnet, daß die Abdeckklappe (5) an ihrer unteren Randkante zumindest einen über ein Filmscharnier (13) einstückig mit ihr verbundenen, in einer Stecköffnung (11) des Rahmens (6) angeordneten Steckzapfen (12) aufweist.

5. Sonnenblende nach einem oder mehreren der Patentansprüche 1 bis 4, dadurch gekennzeichnet, daß der Rahmen einen von der Frontfläche zurückspringenden äußeren Flansch (19) aufweist, auf dem die den Sonnenblendenkörper (1) umhüllende Folie (20) mit ihrem den Rahmen (6) umgebenden Randbereich aufliegt und befestigt ist, daß der Rahmen (6) weiterhin einen inneren zurückspringenden, im Bereich des Betätigungsknopfes ausgesparten Flansch (7) aufweist, gegen den sich einseitig die Abdeckklappe (5) und anderseitig der Spiegel (4) abstützt, und daß der Rahmen (6) mit den Spiegelrand hintergreifenden Klipsnasen (8) ausgerüstet ist.

## Claims

1. A sun visor, particularly for a vehicle, comprising a sun visor body (1) and, embedded therein, a frame (6) holding am mirror (4) and a protective cover (5) therefor, characterized in that the frame (6) including the cover (5) are countersunk into the visor body (1) with their outermost faces substantially flush with the respective outer surface of the visor body (1), in that the frame (6) supports an actuating button (10) which serves to latch and unlatch the cover (5), which also is at least substantially countersunk, is disposed in a cut-out (9) of the frame (6) opposite a tilt axis (hinge 13 formed by a thickness-reduced section of the:) of the cover (5), and provided with a recess (15) arranged to overlappingly engage the upper edge (bulge 14) of the cover (5), and in that said recess, when operationally engaging the edge, is tiltingly movable together with said edge beyond an imaginary connecting line between the tilt axes (hinge 13 and journal pins 18).

2. A sun visor according to claim 1, characterized in that the actuating button (10) is provided on its face remote from the recess (15) with a locking cam (16) interacting with a projection or an edge (17) of the frame (6) and arranged to hold the button in its unlatched position.

3. A sun visor according to claim 1 or claim 2, characterized in that the actuating button (10) is provided with journal pins (18) one each projecting from each of its two lateral faces, and in that the journal pins engage slot-like recesses at the rear of the frame (6) and are arranged to be supported by the mirror (4).

4. A sun visor according to any one or more of the claims 1 to 3, characterized in that the cover (5) is provided at its lower edge with at least one plug (12) integrally connected thereto by a hinge (13) formed by a thickness-reduced section thereof, and in that said plug is inserted into a socket (11) of the frame (6).

5. A sun visor according to any one or more of the claims 1 to 4, characterized in that the frame is provided with an external flange (19) spaced from the front face thereof; in that an edge portion of a foil (20) — which foil encases the visor body (1) — surrounding the frame (6) abuts on and is secured to said flange, in that in addition the frame (6) is provided with a spaced internal flange (7) which is recessed in the region of the actuating button, in that the cover (5) abuts on one side of the internal flange and the mirror (4) on the other opposite side thereof, and in that the frame (6) is equipped with clip-in retainers (8) engaging the rear edge portion of the mirror.

## Revendications

1. Pare-soleil, en particulier pour véhicules automobiles, constitué par un corps (1) à l'intérieur duquel est incorporé un cadre (6) retenant un miroir (4) et un volet de recouvrement (5) destiné à de de cernier, caractérisé en ce que le cadre (6) qui porte le volet de recouvrement (5) est monté à l'intérieur du corps (1) du pare-soleil et se raccorde pratiquement au même niveau à la surface externe correspondante du corps (1) du pare-soleil, et en ce que le cadre (6) comporte un bouton de manoeuvre (10) servant au verrouillage ou au déverrouillage du volet de recouvrement (5), ce bouton étant également largement enfoncé dans un évidement (9) du cadre (6) prévu à l'opposé de l'axe de pivotement (bande de matériau 13 agissant en tant que charnière) du volet de recouvrement (5), ce bouton étant monté parallèlement à l'axe de pivotement du volet de recouvrement (5) et comprenant un enfoncement (15) venant coopérer avec le rebord supérieur (bourrelet 14) du volet de recouvrement (5), l'évidement pouvant dépasser, après être venu en prise avec ce rebord, la ligne de liaison imaginaire des axes de pivotement (c'est-à-dire la bande de matériau formant charnière 13 et les tenons de support 18).

2. Pare-soleil selon la revendication 1, caractérisé en ce que le bouton de manoeuvre (10) comprend sur son côté qui est à l'opposé de l'enfoncement (15) une butée d'arrêt (16) qui coopère avec une saillie ou un rebord (17) du cadre (6) et qui le retient en position de verrouillage.

3. Pare-soleil selon la revendication 1 ou 2, caractérisé en ce que le bouton de manoeuvre (10) comprend sur ses deux côtés des tenons de support (18) en saillie qui pénètrent dans des évidements en forme de trous allongés prévus sur le côté arrière du cadre (6) et qui peuvent être supportés par le miroir (4).

4. Pare-soleil selon une ou plusieurs des revendications 1 à 3, caractérisé en ce que le volet de recouvrement (5) comprend sur son rebord inférieur au moins un tenon d'enclenchement (12) qui en fait partie intégrante par l'intermédiaire d'une bande de matériau (13) formant charnière et qui se dispose dans une ouverture (11) du cadre (6).

5. Pare-soleil selon une ou plusieurs des revendications 1 à 4, caractérisé en ce que le cadre comprend une joue arrière (19) en retrait par rapport à la surface avant, sur laquelle s'applique et se fixe la feuille (20) qui enveloppe le corps (1) du pare-soleil dans sa partie de pourtour entourant le cadre (6), en ce que le cadre (6) comprend en outre une partie en relief (7) tournée vers l'intérieur et évidée dans la zone du bouton de manoeuvre, contre laquelle s'appuie d'une part le volet de recouvrement (5) et d'autre part le miroir (4), et en ce que le cadre (6) est équipé de saillies d'enclenchement (8) coopérant par l'arrière avec le pourtour du miroir.

Fig.1

Fig. 2

Fig.3